# EUROPEAN PATENT APPLICATION

(11) **EP 3 477 431 A1**
(43) Date of publication of application: **01.05.2019**
(21) Application number: 17306483.3
(22) Date of filing: 30.10.2017
(51) Int. Cl.: G06F 3/01, G06F 3/042, G06F 3/044

(54) **DEFORMABLE INTERACTION DEVICE PROVIDING FEEDBACK**

(71) Applicant: THOMSON LICENSING, 92130 Issy les Moulineaux (FR)
(72) Inventor: KELLER, Tony, 8048 Zürich (CH); MEYER, Michael, 8048 Zürich (CH)
(74) Representative: Huchet, Anne

(57) **Abstract**

A device that allows a user to interact with an external device and application by manipulating the device, providing this external device and application with user input captured by a plurality of sensors and receiving feedback to be conveyed to the user through the use of a plurality of actuators. The interaction device is able to take different shapes, to accept different user inputs (touches, movements, pressure, etc.) and to provide different feedbacks to the user (force resistance, air, heat, etc.). In a first mode, the user is able to form the shape of the device by manipulating it and in a second mode the shape is stabilized.

## Description

### TECHNICAL FIELD

The present disclosure relates to the domain of user interfaces and more particularly to a novel input-output device for computers or the like in form of a bag that can be formed, pressed and crunched by the user for having a suitable form for a particular application and able to provide a variety of feedbacks.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Conventional input devices, such as keyboard, mouse, touch surface, allow a computerized system to obtain information from the user of the system. Conventional output devices, such as screens, loudspeakers, indicators using light-emitting diodes, allow a computerized system to deliver feedback to the user of the system. However, such input and output device only provide limited interactions between a user and a computer. This is particularly true in virtual reality environments where the user is immersed in a virtual world and thus requires better interaction devices to fully enjoy the user experience.

Some interaction devices have been proposed in that objective, combining input and output features together, but these devices are targeting specific usages, for example a sword integrating motion sensing to control a virtual sword on a display and haptic feedback to feel the contact with the opponent, a steering-wheel sensing the rotation to control a virtual car on a display and providing force-feedback to feel the road, but also other devices such as bats, guns, sex-toys, etc. Therefore, these interaction devices have very specific shapes and interaction techniques. As a result, they cannot be used to interact with different applications of different types since they are designed for a single type of application.

It can therefore be appreciated that there is a need for a solution for a universal deformable interaction device that addresses at least some of the problems of the prior art. The present disclosure provides such a solution.

### SUMMARY

The present disclosure describes a novel interaction device that allows a user to interact with an external device and application by manipulating the device, providing this external device and application with user input captured by a plurality of sensors and receiving feedback to be conveyed to the user through the use of a plurality of actuators. The interaction device is able to take different shapes, to accept different user inputs (touches, movements, pressure, etc.) and to provide different feedbacks to the user (force resistance, air, heat, etc.). In a first mode, the user is able to form the shape of the device by manipulating it and in a second mode the shape is stabilized.

In a first aspect, the disclosure is directed to an interaction device for providing user input to a second device, the interaction device having deformable shape and comprising: an inner cover realized in a flexible air-tight material, closed around a cavity filled with a plurality of semi-conducting elastic balls, and covered on its inside surface with a plurality of conductive patches, a pump configured to control the pressure of the inner cover, impacting the rigidity of the plurality of the semi-conducting balls, a processor configured to: measure conductivity between the plurality of conductive patches and determine a conductivity matrix representing the forces applied by a user on the interaction device and control the pump to operate in two modes, a first mode where the pressure of the inner cover is normal allowing to form the shape of the device and a second mode where the inner cover is under-pressured to stabilize the shape formed in the first mode, and a communication interface to provide the conductivity matrix to the second device.

In variant embodiments of first aspect:
- a button allows to switch between the first mode and the second mode.
- the pressure is adjustable in the second mode to control the rigidity of the shape.
- the control of the rigidity of the shape is done by the user through an adjustable element.

In a second aspect, the disclosure is directed to an interaction device of first aspect further comprising a feedback pump connected to an inflatable feedback balloon and wherein the processor is further configured to control the feedback pump to inflate or deflate the inflatable feedback balloon according to feedback information obtained from the second device through the communication interface.

In a third aspect, the disclosure is directed to an interaction device of first or second aspect further comprising at least one sensor among a list of sensors comprising an accelerometer, a gyroscope, a temperature sensor, a pressure sensor, a microphone and a camera, wherein the processor is further configured to provide information from the at least one sensor to the second device through the communication interface.

In a fourth aspect, the disclosure is directed to an interaction device of first, second or third aspect further comprising at least one actuators among a list of actuators comprising a vibrator, an electrical stimulator, lighting, an air blower, a heater and a speaker, wherein the processor is further configured to provide information to at least one actuator from the second device through the communication interface.

In a fifth aspect, the disclosure is directed to an interaction device of first, second, third or fourth aspect, wherein the inner cover is surrounded by a protective outer cover realized in a flexible material.

In variant embodiments of fifth aspect:
- the outer cover comprises a plurality of light emitting diodes and wherein the processor is further configured to obtain lighting information from the second device through the communication interface, the lighting information allowing to guide the user in forming a determined shape,
- the outer cover further comprises a conductive surface determine a set of virtual keys,
- a glove comprising sleeves adapted to receive the fingers of a user is fixed to the outer cover,
- the outer cover and inner cover further comprise an opening to allow the user to add or remove balls from the cavity, and wherein the opening is air-tight when closed.

In a sixth aspect, the disclosure is directed to the utilization of an interaction device of first, second, third, fourth, or fifth aspect by a virtual reality application to interact with a user.

### BRIEF DESCRIPTION OF DRAWINGS

Preferred features of the present disclosure will now be described, by way of non-limiting example, with reference to the accompanying drawings, in which:
Figure 1A illustrates an exemplary interaction device in which at least an embodiment of the disclosure may be implemented, the interaction device being formed in a random shape;
Figure 1B illustrates a simplified sectional cut of an exemplary interaction device in which at least an embodiment of the disclosure may be implemented, the interaction device being formed in a random shape;
Figures 2A, 2B, 2C illustrate various pressure levels over an exemplary interaction device;
Figure 3A illustrates an exemplary interaction device being formed in a sword-handle shape;
Figure 3B illustrates an exemplary interaction device being formed in a dumbbell shape;
Figure 3C illustrates an exemplary interaction device being formed in a gun shape;
Figure 4 illustrates the architecture of an exemplary device in which at least an embodiment of the disclosure may be implemented;
Figure 5 illustrates a detailed sectional cut of an exemplary interaction device in which at least an embodiment of the disclosure may be implemented;
Figure 6A illustrates a simplified implementation of the conductive grid according to an embodiment of the disclosure;
Figure 6B illustrates an equivalent electrical schematic of a simplified implementation of the conductive grid according to an embodiment of the disclosure;
Figure 7 illustrates an example of utilization in a basket-ball game application of an interaction device according to an embodiment of the disclosure.

### DESCRIPTION OF EMBODIMENTS

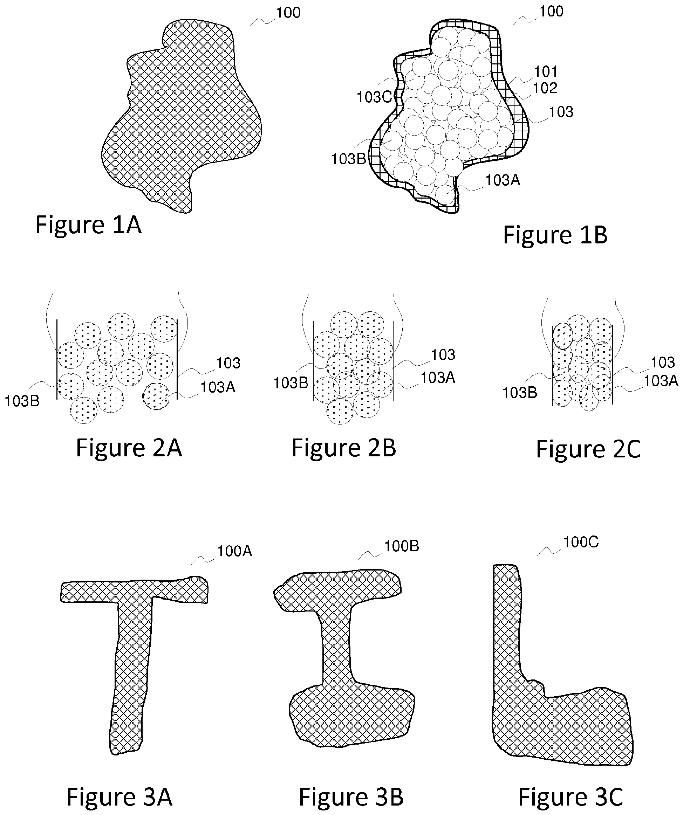

**Figure 1A** illustrates an exemplary interaction device in which at least an embodiment of the disclosure may be implemented, the interaction device being formed in a random shape. This figure shows how the interaction device looks after being formed by the user into a random shape corresponding to a particular usage. For particular use, the interaction device can have a more advantageous form (longish, L-shape, flat, animal-like) than just a round bag.

**Figure 1B** illustrates a sectional cut of an exemplary interaction device in which at least an embodiment of the disclosure may be implemented, the interaction device being formed in a random shape. The interaction device 100 comprises an outer cover 101, an inner cover 102 and a cavity 103. The outer cover 100 is primarily of a flexible type and allowing a good grip. A wide range of materials may be used to realize the outer cover 100, from cotton to neoprene. The outer cover 100 can be constructed of different materials in various areas allowing different interactions. The outer cover 100 protects the inner layers (inner cover 102 and cavity 103). The inner cover 102 is of flexible and isolating material having on its inner surface a plurality of distributed conductive patches connected to the processor (not shown in figure 1 B), for example through wires or printed strips, the inner surface forming a so-called conductive grid. The inner cover 102 is closed around a cavity 103 and is air-tight so that its pressure can be controlled by adding more air into it or removing air from it, for example using an air pump. The cavity 103 is filled with semi-conducting plastic balls 103A, 103B, 103C, etc. that are kept together within the inner cover. Those balls are advantageously realized in elastic material for better form-giving and force sensing (as illustrated in figures 2A, 2B, 2C). The balls are for example made of polymers with conducting fillers or additives like coal or aluminum. They have a conductance of several kilo-ohms to meg-ohms. Antistatic polystyrene is an example of material for the realization of the balls 103A, 103B, 103C, etc.

**Figures 2A, 2B, 2C** illustrate various pressure levels over an exemplary interaction device. These figures are used to illustrate two different notions: first the force applied by the user, second the rigidity of the shape. The figures 2A, 2B,2C illustrate a cavity 103 on an interaction device 100, the cavity being filled with semi-conductive elastic balls 103A, 103B.

First, in figure 2A, no force is applied by the user. For example, the device is lying on a table. The balls are moving freely inside the cavity. In figure 2B, a slight compression is applied by the user on both sides of the device; the balls are tightened, and since the balls are semi-conductive, the resistance of the set of balls decreases in the direction where the user applied its force. In figure 2C, a strong compression is applied by the user; yet decrease more the resistance. By measuring the resistance between the borders of the device at the point of impact from the user, it is possible to determine the force applied by the user. If a plurality of sensing points is available all over the surface of the cavity, it is also possible to determine the direction of the force applied by the user.

Secondly, these figures may also be used to explain the shape forming process. The pressure inside the cavity can be controlled by deflating or inflating it since the cavity is air-tight. In figure 2A, the pressure inside the cavity is normal; the balls are moving freely. In figure 2B, air have been extracted from the cavity. The balls are tightened and more friction exists between the balls, requiring more strength to move the balls around. However, if the user manipulates the interaction device, the balls still move allowing to form an overall shape to the device. In figure 3C, more air has been extracted and the cavity is under-pressured. The balls do not move anymore so that the shape is stabilized and does not change anymore, at least while the under-pressure is maintained. Thus, the interaction device 100 operates in two modes: a first mode where the user may form a shape and a second mode where the shape is fixed.

**Figures 3A, 3B, 3C** illustrate exemplary interaction devices being formed respectively in the shape of a sword-handle, a dumbbell and a gun. These examples of shapes do not look perfect with regards to the corresponding real objects. However, when used in an immersive environment in combination with a virtual reality headset, the interaction capabilities prevail over an accurate shape. Indeed, in such application, the user is immersed in a virtual world and does not directly see the interaction device 100 but only a virtual representation of it and more importantly the user manipulates the interaction device. Thus, the versatility of the interaction device 100 allows to use it in different applications such as an adventure game using the sword-handle of figure 3A, a fitness application using the dumbbell of figure 3B or a first-person-shooter game using the gun of figure 3C. Indeed, the user can transform his interaction device 100 to form it successively into different shapes such as the one cited above. Therefore, s/he needs to buy only one interaction device 100 and will be available to use it in multiple different applications, unlike conventional specific input devices that are adapted only to a particular usage for a single type of application.

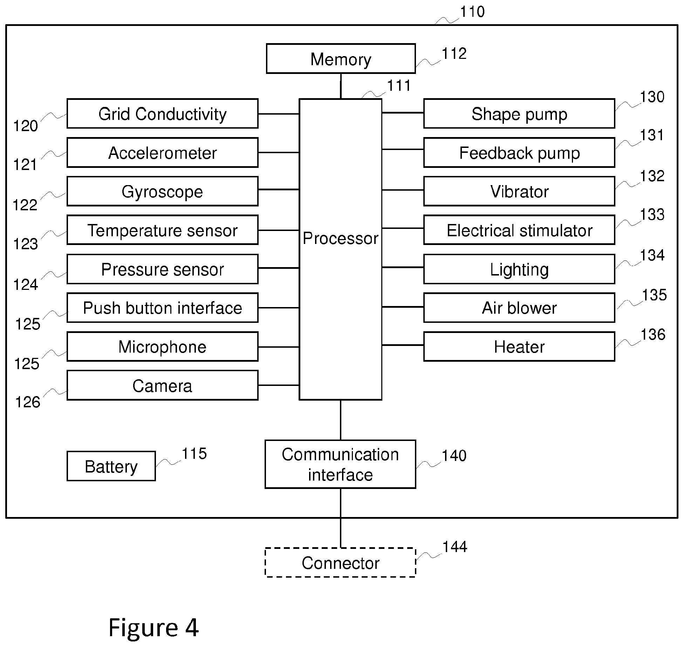

**Figure 4** illustrates the architecture of an exemplary device in which at least an embodiment of the disclosure may be implemented. The interaction device 100 allows a user to interact with an external device such as a computer or the like, providing this external device with user input captured by a plurality of sensors and receiving feedback to be conveyed to the user through a plurality of actuators. As introduced previously, the interaction device 100 comprises an outer cover 101, an inner cover 102 and a cavity 103 filled with balls 103A, 103B, 103C, etc. The interaction device 100 further comprises a processor 111 configured to obtain input information from user through at least one of the plurality of sensors, send them to the computer through the communication interface 140 and an optional connector 144, receive feedback information and render the feedback to the user through at least one of the plurality of actuators. A memory 112 interfaces with the processor to store parameters related to the interaction device 100. One example of communication interface 140 is Universal Serial Bus (USB) that could also be used to charge the internal battery 115. Another example is to use a wireless communication such as Wi-Fi or Bluetooth. In this case, the charging of the internal battery is done either wirelessly or via a wired connection.

In a preferred embodiment, the interaction device 100 further comprises a shape pump 130. This pump is a pneumatic pump allowing to inflate or deflate the inner cover 102 by either pumping air into the cavity 103 or pumping the air out of the cavity 103. To allow the user to form the desired shape of the interaction device 100, the shape pump 130 inflates the cavity 103 so that the balls move freely, and the user may form the desired shape until reaching for example one of the forms of figures 3A, 3B, 3C. The shape pump 130 deflates the cavity, therefore applying a vacuum (under-pressure) to the cavity 103. Thanks to this vacuum, the space between the balls is reduced so that the balls cannot move anymore. As a result, the shape formed by the user is stabilized and does not change anymore while the cavity 103 is under-pressured. The interaction device 100 provides a mechanism to select between the deflated or inflated states. This selection is preferably under control of the user. One implementation for this selection is to use a physical button accessible to the user on the outer cover 101 of the device. Optionally, this selection also comprises a control of the level of under-pressure of the cavity 103. This level adjusts the amount of free space in the cavity 103 thus determines how easy the balls can still move within the cavity and therefore how easy the shape can be modified. In the preferred embodiment, the shape pump 130 is located inside the interaction device 100. In a variant embodiment, the shape pump 130 is located outside the interaction device 100.

In another embodiment, another effect is used for keeping the form of the interaction device like electrostatic or a mechanical resizing.

In the preferred embodiment, the interaction device 100 further comprises a grid conductivity sensor 120. The inner cover is configured with several conductive areas, called patches, isolated from the other patches and forming a conductive grid. Each patch is connected to the processor to measure the input provided by the user. Indeed, the patches are more or less in connection with the semi-conducting balls 103A, 103B, 103C, etc. The more the user presses the interaction device 100, the better will be the connection between two patches, for example patches located on opposite sides of the interaction device 100. Indeed, the contacting surface of the balls is rising due to the elasticity in relation with the pressure applied and thus the ohmic resistance is decreasing. Depending on the location, strength and direction of the compression performed by the user, various paths of reduced ohmic resistance are generated. Conductance values (equivalent to the inverse of the ohmic resistance value) between the plurality of shapes are measured by the processor 111 and this information generates a compression pattern representative of the type of compression applied by the user on the current shape. For example, if the shape of the interaction device takes the form of a ball and that the user presses the ball within his hands, the grid conductivity sensor 120 allows to sense the direction of the user pressure (horizontal, vertical or sideways). This pattern is provided to the external device as the input from the user on the interaction device 100.

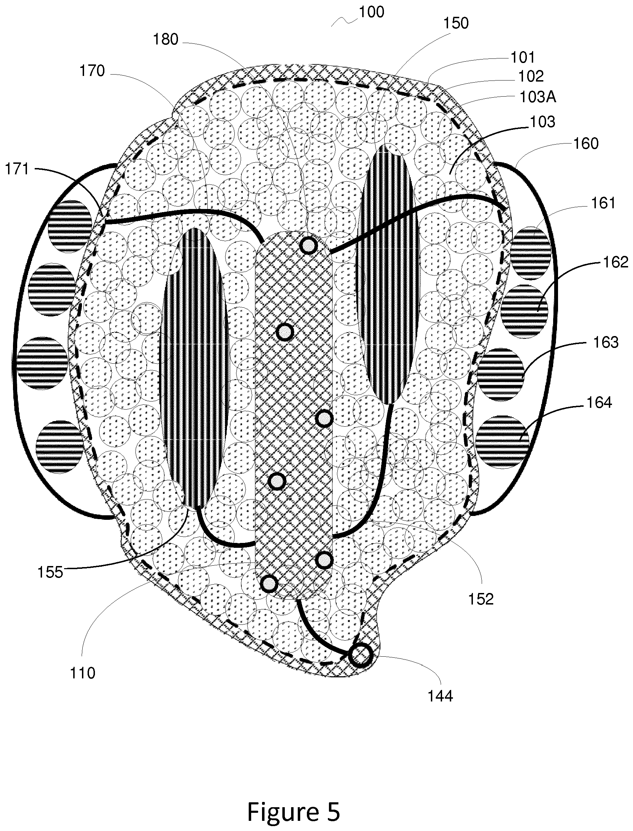

In a variant embodiment, the interaction device 100 further comprises a feedback pump 131 linked through an air conduit (152 in figure 5) to an inflatable feedback balloon (150 in figure 5) positioned inside the inner cover 102 within the set of balls 103A, 103B, 103C, etc. In different variants, the interaction device 100 comprises a single balloon, several balloons or a plurality of smaller balloons, but still using the same principle. When the feedback balloon is inflated, the user feels a resistance and a volume that is not present when the balloon is deflated. The level of pressure provided by the feedback pump 131 to the feedback balloon is depending on a feedback information received from the external device and is advantageously set in response to an input provided by the interaction device 100. The advantage of using multiple smaller balloons is to provide a more fine-grained level of feedback. In a variant embodiment, the feedback pump 131 is located outside the interaction device 100.

In variant embodiments, the interaction device 100 further comprises other sensors such as an accelerometer 121, a gyroscope 122, a temperature sensor 123, a pressure sensor 124, some buttons (either mechanical switches or electronical touch-type) located on the outer cover 101 and a corresponding interface 125, a microphone 126, a camera 127. The sensors are used separately or in combination together and preferably in combination with the compression pattern.

In variant embodiments, the interaction device 100 further comprises other actuators such as a vibrator 132, electrical stimulator 133 using conductive areas implemented all over the outer cover 101 (for example in a checkerboard or honeycombs like structure for creating the electrical stimulation to the user), lighting 134, air blower 135 a heater 136 or a speaker 137. These actuators are used separately or in combination together and preferably in combination with the feedback pump 131.

The air blower 135 provides an airflow to the user by blowing air with an air-pump through perforations in the outer cover 101 and so air is escaping for example beneath the fingers of the users to provide some windy feedback.

In a variant embodiment, the lighting actuator 134 comprises a plurality of light-emitting diodes (LEDs) of variable colours integrated into the outer cover 101. These LEDs may be used to guide the user into forming a determined shape. For example, in the areas where the LEDs are lit in green, no movement needs to be done, in the areas where the LEDs are lit in red, the user has to press the area to reduce the thickness of the device on the surface lit in red, in the areas where the LEDs are lit in blue, the user has to move internal balls towards this area to increase the thickness of the device on the surface lit in blue. Thus with this technique, when launching an adventure game requiring to form the shape of a sword, the user would be guided in the shaping process by the lighting. After quitting the game and launching a fitness application, he would be guided into the forming of the dumbbell required for the exercises.

The light could also be used for giving a specific look of the interaction device and make it more realistic. ,For example, a round shape interaction device could be lit on brown to look like a basketball or in a black and white pattern to look like a soccer ball. Electrically stimulated covers for changing colours might be an alternative.

All hardware elements, comprising the processor 111, the actuators, the sensors, the communication interface and the battery, are located in a housing 110 positioned preferably inside the interaction device, for example in the cavity 103 or between the outer cover 101 and the inner cover 102.

The interaction device 100 is preferably using wireless communication technologies so that it is only wired to a device or power-supply for charging, configuration, etc. The battery is advantageously charged via a wireless charging system. The interaction device 100 contains all the power management and driving functions including the power part for supplying all the diverse actuators (e.g.: pumps). The previous list of sensors and actuators is not exhaustive for simplicity reason and may comprise other elements.

In the preferred embodiment, the processor 111 controls the different functions of the interaction device 100, comprising conditioning of signals provided by the sensors (amplifying, filtering and digital conversion), driving all actuators (pumps, speaker, lamps, heating etc.), handling the shape forming operation and controlling the data exchange with the external device. Some functions are implemented with conventional hardware components under control of the processor 111 while others are implemented in software executed by the processor 111.

**Figure 5** illustrates a detailed sectional cut of an exemplary interaction device in which at least an embodiment of the disclosure may be implemented. This version of interaction device is a more complete version than the simplest version as described in figure 1B. The person skilled in the art will appreciate that many intermediate variant of interaction device may exist, between the simplest version as described in figure 1 B to the more complete version of figure 5. The interaction device 100 comprises an outer cover 101, an inner cover 102, a cavity 103 filled with balls 103A, a housing 110 comprising the processor (not shown), battery (not shown) and actuators (not shown), a connector 144 to external device, an inflatable feedback balloon 150 linked through an air conduit 152 to the feedback pump (not shown) located in the housing 110, an air conduit 170 for blowing air with an air-pump (not shown) located in the housing 110 through perforations 171 in the outer cover 101, air vents 180 for evacuation of air when deflating the cavity 103 or the inflatable feedback balloon 150.

In a variant embodiment, the interaction device 100 comprises at least one glove 160 comprising sleeves 161, 162, 163, 164 where the user inserts his fingers. Such fitment offers better grip and carrying of the interaction device 100. The sleeves are advantageously equipped by buttons (either mechanical switches or electronical touch-type) for increased interaction capabilities.

The person skilled in the art will appreciate that, when the outer cover comprises conductive surface that can be used to define a set of "virtual" keys by measuring conductivity of the fingers, either throughout the interactive device 100 or only for a specified area of the interactive device 100. To configure the interactive device 100, a calibrating process for generating ad-hoc-buttons can be executed when the shape has been formed to learn the effective position of the virtual buttons. This process could be of the type: press first finger, press second finger, press all fingers of right hand, etc. After this configuration, the preset can be stored in the memory 112 of the interactive device 100 or can be provided to the external device and application.

By use of carefully preformed inner covers, maybe having inner sections (pouches) and/or elastic connection a particular native form can be given by just relaxing all forces (like a memory effect). By use of the inner and outer air-bags, some presets can be made that are recallable. By adding some additional actuators (e.g. a constricting force) and inner pouches with special forms (e.g. a toroid), more preset forms can be selected. The user might define new forms himself.

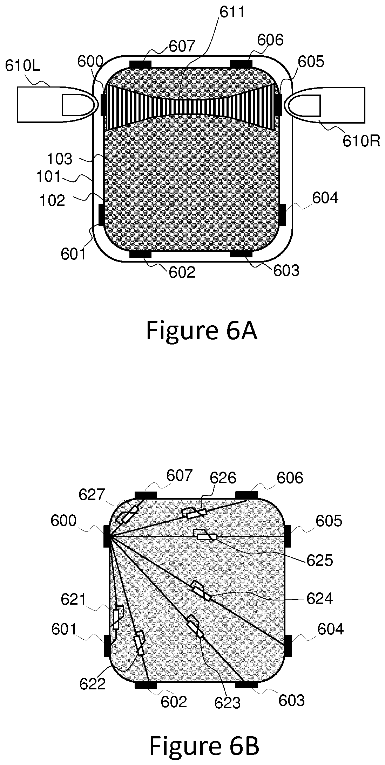

**Figure 6A** illustrates a simplified implementation of the conductive grid according to an embodiment of the disclosure. The figure 6 shows a simplified implementation of the patches that form the conductive grid with a set of 8 patches 600, 601, 602, 603, 604, 605, 607. A typical implementation of interaction device 100 would preferably have at least one hundred patches but low cost versions with lower number of patches (8, 16, 32 patches for example) are also possible. The patches are located on the inner cover 102 and measure the conductivity between each other. The conductivity measurement is a physical, two-dimensional problem. The conductivity between all patches on the inner cover 102 is measured permanently (sequentially) and supervised. Any change in the applied pressure can indicate the activation of a function by pressing one fingertip on the interaction device 100. **Figure 6B** illustrates an equivalent electrical schematic of a simplified implementation of the conductive grid according to an embodiment of the disclosure. It shows that, for example for patch 600, there is a variable resistance thus a variable conductance from the patch 600 to all the other patches 601 to 607, represented in the illustration by the elements 621, 622, 623, 624, 625, 626 and 627. This applies to the other patches so that the conductivity measurement results in a matrix of M x M elements, M being the number of patches measuring conductivity. Back to figure 6A, when the user compresses the interaction device using his fingers 610L and 610R, he compresses first the outer cover 101 that transmits the compression to the inner cover 102 and finally to the balls in the cavity 103 that are located in between the two fingers. The compression of the balls is represented by the area 611. This compression will be measured mainly by the patches 600 and 605 since the conductivity between these patches will change in response to the increased compression of the semi-conductive elastic balls in the cavity 103, therefore impacting mainly the element 625. This compression will obviously not impact the conductivity between the patches 602 and 603 or only marginally (depending on the materials chosen for the balls, the value of the under-pressure and the quantity of balls in the cavity).

To perform the measurement of grid conductivity, all the relation values between all the patches are measured in a pressure-free reference state where the user does not apply any compression to the interaction device 100. These values are stored in a table in memory 112, acting as reference values. This reference state can also be triggered manually by the user through a button of the interaction device 100. In normal use, once the shape of the device has been stabilized, the conductivity between all the patches are measured from time to time, for example regularly every 10ms. As soon as a pressure is applied, as for instance shown in figure 6A by the fingers 610L and 610R, the conductivity between the patches will change. The processor measures the new conductivities and compares them with the respective previous values. The calculation could be done in absolute, e.g. ohmic, or relative values and results in a conductivity matrix as presented in Table 1. This conductivity matrix shows the resistance changes between the patches in respect to the reference state in the case of user interaction of figure 6A. In the preferred embodiment, this conductivity matrix is directly provided to the external device as an indication of the input performed by the user on the interaction device 100.

**Table 1: Conductance change after compression if figure 6A**

| | 601 | 602 | 603 | 604 | 605 | 606 | 607 |
|---|---|---|---|---|---|---|---|
| 600 | +5% | +5% | 0% | +5% | +100% | +20% | +50% |
| 601 | | -10% | 0% | +5% | +15% | +15% | +15% |
| 602 | | | 0% | +5% | +20% | +20% | +20% |
| 603 | | | | -5% | +25% | +25% | +25% |
| 604 | | | | | +30% | +30% | +30% |
| 605 | | | | | | +50% | +40% |
| 606 | | | | | | | +20% |

The larger the area of the interaction device 100 is squeezed the more signals are similar, even and correlated - and vice versa. This means that if pressure is applied only in a small area the system measures a peak of change in the conductivity. Due to elasticity of the cavity or release of other pressure-points, values could also be negative such as between patches 601 and 602: balls in this area are released in result of the free space offered by the compression of the balls in between patches 600 and 605.

The person skilled in the art will appreciate that the reference state cannot be established at manufacturing since the grid conductivity depends on the shape formed by the user.

A local pre-processing of the conductivity matrix can be done by the processor 111 to increase the accuracy of the signal evaluation and to smoothen the output-signals. In this case, the complete conductivity matrix is not provided to the external device, since the user input information has already been selected. A first selection is to detect only the maximum change in the table and therefore detect a single grip direction. A second technique is to use a dynamic threshold in the case several interactions are awaited simultaneously. A third technique is to use a median threshold. The type of information provided by the interaction device 100 to the external device may be selected either according to user preferences, or by the application running of the external device or by the interaction device itself.

The conductivity measurement is not limited to DC. For certain type of balls 103a etc., an AC measurement or AC measurements at different frequencies will support the detection process.

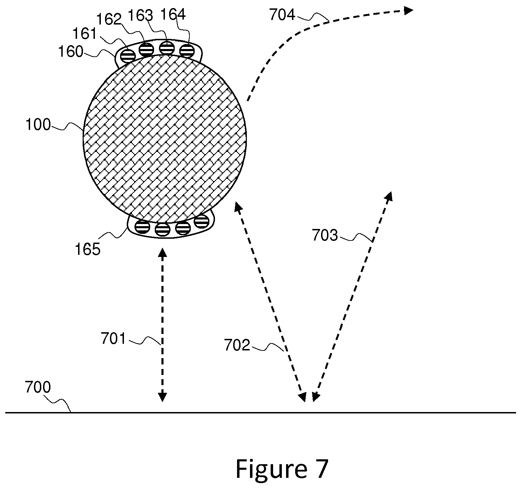

**Figure 7** illustrates an example of utilization in a basket-ball game application of an interaction device according to an embodiment of the disclosure. The interaction device 100 corresponds to the device illustrated in figure 5 and comprises two gloves 160, 165, the first glove 160 comprising sleeves 161, 162, 163, 164 where the user inserts his fingers and the second glove 165 that is not used for this application. In the shape forming phase, the user crunches the interaction device 100 into a nearly ball form and sets the vacuum of the inner cover such that the form becomes medium stable, a little bit elastic. The user puts his fingers or the complete hand into the sleeves, puts is virtual reality headset and starts the basket-ball application. A virtual ball is displayed in the headset and follows the movements induced by the user holding the interaction device 100. When the user moves the ball vertically 701 up and down, the application detects the increased pressure on the conductivity matrix around the areas of the sleeves, together with the vertical and horizontal (3-dimensional) acceleration or solid-angle change (by use of a gyroscope). It calculates the flying-path and delivers to the interaction device 100 feedback information so that the pressure on the players hand is relaxed (impression of losing the ball, drop down phase). This is done by controlling the feedback pump 131 to release some air according to the feedback information received from the external device. After a certain time, a sound effect is played when the ball virtually touches ground and after that, the feedback information will instruct to inflate again the feedback balloon 150, possibly at a desired level of pressure. As a result of that inflation, the user will feel an increased pressure on his hand at the moment where the ball is virtually back in the hand in his headset. Thus, he has the feeling of having again contact with the ball. The user may also move during the up and down movements so that the application simulates a walking-bounce 702, 703 and will move the virtual character accordingly. Similarly, a throw 704 can be performed by the user and is detected. The only thing that cannot be simulated is the loosing of a ball. Here only the active forces of a catching could be disabled together with the VR images.

The shape formed by the user impacts multiple aspects of the interaction device 100: the position of buttons (either physical or virtual buttons), the way that the conductive grid responds upon user inputs of the user as well as the way that the feedback impacts the user. Therefore, in most cases, a calibration phase can be performed so that the application of the external device using the interaction device 100 can configure itself correctly. In such a phase, the user may be asked to perform some specific manipulation in order for the application to learn from the data exchanged (e.g. conductivity matrix). This phase preferably includes the shape forming phase that might be guided by the application through the LEDs, as described hereabove. It could also permit that the user discovers the interactive device 100 in the particular shape that was given and learns how to interact with it and with the application.

Despite the description only mentions a single interaction device, the person skilled in the art will appreciate that simultaneous usage of multiple interaction devices could bring benefits for the users.

In a variant embodiment, an optional third mode can be used where the vacuum is applied in such a manner that a small forming is possible but requests some force.

In a variant embodiment, an optional fourth mode, where the cavity is divided in sections that can be controlled independently, for example using multiple shape pumps. The sections of the cavity are in either the first, second or third mode. This could provide more precise feedback, differentiated according to multiple divisions.

In a variant embodiment, the outer cover 101 and an inner cover 102 comprise an opening such as a zipper to allow the user to add or remove balls from the cavity 103. This permits to adapt to different sizes of shapes when required. However, the opening needs to be air tight when closed in order to preserve the internal pressure.

In another variant embodiment, the interaction device 100 is used in standalone mode, without any external device, and integrates directly an application that makes use of the captured inputs and controls the feedback. This application may be stored in memory 112 and executed by the processor 111. In such embodiment, the external connection is limited to the connection needed to charge the battery, in the case where no wireless charging is integrated.

## Claims

1. An interaction device (100) for providing user input to a second device, the interaction device having deformable shape and comprising:
- an inner cover (102) realized in a flexible air-tight material, closed around a cavity (103) filled with a plurality of semi-conducting elastic balls (103A, 103B, 103C), and covered on its inside surface with a plurality of conductive patches;
- a pump (130) configured to control the pressure of the inner cover, impacting the rigidity of the plurality of the semi-conducting balls;
- a processor (111) configured to:
- measure conductivity between the plurality of conductive patches and determine a conductivity matrix representing the forces applied by a user on the interaction device; and
- control the pump to operate in two modes, a first mode where the pressure of the inner cover is normal allowing to form the shape of the device and a second mode where the inner cover is under-pressured to stabilize the shape formed in the first mode; and
- a communication interface (140) to provide the conductivity matrix to the second device.

2. The interaction device according to claim 1 further comprising a button to switch between the first mode and the second mode.

3. The interaction device according to claim 2 wherein the pressure is adjustable in the second mode to control the rigidity of the shape.

4. The interaction device according to claim 3 wherein the control of the rigidity of the shape is done by the user through an adjustable element.

5. The interaction device according to any one of claims 1 to 4 further comprising a feedback pump (131) connected to an inflatable feedback balloon (150) and wherein the processor (111) is further configured to control the feedback pump (131) to inflate or deflate the inflatable feedback balloon (150) according to feedback information obtained from the second device through the communication interface (140).

6. The interaction device according to any one of claims 1 to 5 further comprising at least one sensor among a list of sensors comprising an accelerometer (121), a gyroscope (122), a temperature sensor (123), a pressure sensor (124), a microphone (125) and a camera (126), wherein the processor (111) is further configured to provide information from the at least one sensor to the second device through the communication interface (140).

7. The interaction device according to any one of claims 1 to 6 further comprising at least one actuators among a list of actuators comprising a vibrator (132), an electrical stimulator (133), lighting (134), an air blower (135), a heater (136) and a speaker (137), wherein the processor (111) is further configured to provide information to at least one actuator from the second device through the communication interface (140).

8. The interaction device according to any one of claims 1 to 7 wherein the inner cover (102) is surrounded by a protective outer cover (101) realized in a flexible material.

9. The interaction device according to claim 8 wherein the outer cover (101) comprises a plurality of light emitting diodes and wherein the processor is further configured to obtain lighting information from the second device through the communication interface (140), the lighting information allowing to guide the user in forming a determined shape.

10. The interaction device according to any one of claims 8 to 9 wherein the outer cover (101) further comprises a conductive surface determine a set of virtual keys.

11. The interaction device according to any one of claims 8 to 10 wherein a glove (160) comprising sleeves (161, 162, 163, 164) adapted to receive the fingers of a user is fixed to the outer cover (101).

12. The interaction device according to any one of claims 8 to 11 wherein the outer cover (101) and inner cover (102) further comprise an opening to allow the user to add or remove balls from the cavity 103, and wherein the opening is air-tight when closed.

13. Utilization of an interaction device (100) according to any one of claims 1 to 12 by a virtual reality application to interact with a user.
